# EUROPÄISCHE PATENTSCHRIFT

(11) **EP 3 302 186 B1**
(45) Veröffentlichungstag und Bekanntmachung des Hinweises auf die Patenterteilung: **04.09.2019**
(21) Anmeldenummer: 16720425.4
(22) Anmeldetag: 04.05.2016
(51) Int. Cl.: A47J 31/44

(54) **GETRÄNKEAUTOMAT**
DRINKS MACHINE
DISTRIBUTEUR AUTOMATIQUE DE BOISSON

(30) Priorität: 03.06.2015 DE 102015210339
(43) Veröffentlichungstag der Anmeldung: 11.04.2018
(73) Patentinhaber: BSH Hausgeräte GmbH, 81739 München (DE)
(72) Erfinder: LUIPPOLD, Gregor, 82031 Grünwald (DE); GNIELKA, Katja, 81371 München (DE)
(86) Internationale Anmeldenummer: PCT/EP2016/060029
(87) Internationale Veröffentlichungsnummer: WO 2016/192920

(56) Entgegenhaltungen:
- Seattle Coffee Gear: "Crew Review: DeLonghi Magnifica ESAM 3300", YouTube, 16. April 2014 (2014-04-16), Seiten 1-1, XP054976571, Gefunden im Internet: URL:https://www.youtube.com/watch?v=EcwuHA _eB0A [gefunden am 2016-06-01]

## Beschreibung

Die vorliegende Erfindung betrifft einen Getränkeautomaten, insbesondere einen Kaffeeautomaten, mit einer Aufnahme für einen Wassertank gemäß dem Oberbegriff des Anspruchs 1. Die Erfindung betrifft außerdem einen Wassertank eines solchen Getränkeautomaten.

Gattungsgemäße Getränkeautomaten, wie beispielsweise Kaffeeautomaten, sind hinlänglich bekannt und benötigen für die Herstellung der Getränke Wasser. Dieses kann entweder, insbesondere bei gewerblichen Getränkeautomaten, direkt aus einem Leitungsnetz entnommen werden, oder aber aus einem Wassertank, welcher je nach Volumen und je nach Anzahl der hergestellten Getränke immer wieder neu befüllt werden muss. Üblicherweise werden derartige Getränkeautomaten mit einem Wassertank im Consumerbereich eingesetzt, wobei der Wassertank in der überwiegenden Anzahl der Fälle vertikal in eine entsprechende Aufnahme des Getränkeautomaten eingesetzt wird.

Nachteilig bei den aus dem Stand der Technik bekannten Getränkeautomaten ist dabei jedoch, dass oberhalb des Getränkeautomaten vergleichsweise viel Freiraum vorhanden sein muss, der ein problemloses Herausnehmen und Wiedereinsetzen des Wassertanks erlaubt. Dies steht insbesondere im Widerspruch zu immer kleiner werdenden freien Bauräumen in modernen Küchen.

Dem Fachmann ist aus dem Stand der Technik der Kaffeeautomat "DeLonghi Magnifica 3300 Espresso Machine" bekannt, der einen Wassertank aufweist, der frontal aus einer Aufnahme des Kaffeeautomaten entnehmbar und frontal in diese einsetzbar ist, wobei der Wassertank einen Griff aufweist, der durch einen speziell geformten Abschnitt einer ersten seitlichen Gehäusewand des Wassertanks gebildet ist.

Die vorliegende Erfindung beschäftigt sich mit dem Problem, für einen Getränkeautomaten der gattungsgemäße Art eine verbesserte oder zumindest eine alternative Ausführungsform anzugeben, die sich insbesondere durch eine Komfortsteigerung und eine zugleich kostengünstigere Herstellungsweise auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Getränkeautomaten, insbesondere bei einem Kaffeeautomaten, einen im Wesentlichen horizontal entnehmbaren und wiedereinsetzbaren Wassertank vorzusehen und zugleich einen Griff zum Entnehmen, Halten und Wiedereinsetzen des Wassertanks in eine erste seitliche Gehäusewand des Wassertanks zu integrieren, wodurch der erfindungsgemäße Wassertank nicht nur komfortabel entnommen und wieder eingesetzt, sondern zudem auch kostengünstig hergestellt werden kann. Durch die Möglichkeit, den Wassertank frontal aus einer Aufnahme des Getränkeautomaten zu entnehmen und in entgegengesetzter Richtung ebenfalls frontal wieder in dieser Aufnahme einzusetzen, bietet sich der große Vorteil, dass der oberhalb des Getränkeautomaten erforderliche Freiraum deutlich kleiner sein kann, als dies beispielsweise bei Getränkeautomaten gemäß dem Stand der Technik erforderlich ist, bei welchen der Wassertank vertikal nach oben entnommen wird. Darüber hinaus ist es möglich die gesamte obere Fläche des Getränkeautomaten für andere Dinge, beispielsweise zum Abstellen von Tassen, nutzen zu können und nicht freihalten zu müssen. Durch die Möglichkeit des frontalen Beschickens des Getränkeautomaten mit dem Wassertank ist es sogar möglich, diesen in einer passgenauen Nische unterzubringen, da auch seitlich des Getränkeautomaten kein Freiraum vorhanden sein muss, um den Wassertank zu entnehmen bzw. wieder in Aufnahme einsetzen zu können. Durch die integrale Ausbildung des Griffs durch einen speziell geformten Abschnitt der ersten seitlichen Gehäusewand des Wassertanks ist auch eine separate Herstellung und einhergehend damit eine Montage des separat hergestellten Griffs am Wassertank entbehrlich, wodurch der Wassertank und auch ein damit ausgestatteter Getränkeautomat kostengünstiger gefertigt werden können. Der speziell geformte Abschnitt der ersten seitlichen Gehäusewand des Wassertanks ist dabei so ausgebildet, dass ein problemloses Greifen und Halten des Wassertanks über den Abschnitt möglich ist. Zumindest der Griff ist erfindungsgemäß transparent ausgebildet und weist eine Füllstandskala auf.

Bei einer vorteilhaften Weiterbildung der erfindungsgemäßen Lösung ist der speziell geformte Abschnitt als vertikal verlaufende Stufe ausgebildet, die über einen Rücksprung in die erste seitliche Gehäusewand des Wassertanks übergeht. Dieser Rücksprung bildet somit eine Art Hintergriff, in welchen zum Herausziehen des Wassertanks aus der Aufnahme eingegriffen werden kann. Der Rücksprung ist dabei so tief, dass ein sicheres und zuverlässiges Greifen des Wassertanks über den speziell geformten Abschnitt möglich ist. Dem Rücksprung kommt darüber hinaus noch eine zweite Funktion zu, nämlich die eines Anschlages, sodass der Wassertank vorzugsweise soweit in die Aufnahme einschiebbar ist, bis eine Wand der Aufnahme an dem Rücksprung anliegt, bzw. an diesem anstößt. Die Wand der Aufnahme ist dabei nach innen versetzt, sodass die durch den Rücksprung gebildete Stufe, d.h. der Griff auch bei vollständig in die Aufnahme eingeschobenem Wassertank erhalten bleibt.

Zweckmäßig ist an der Stufe eine Leiste angeordnet. Eine derartige Leiste kann zumindest geringfügig senkrecht vom speziell geformten Abschnitt nach außen abstehen und ermöglicht dadurch eine deutlich verbesserte Haptik beim Greifen des Wassertanks.

Erfindungsgemäß ist zumindest der Griff bzw. der speziell geformte Abschnitt transparent ausgebildet und weist eine Füllstandskala auf. Dies bietet den großen Vorteil, dass auch bei vollständig in die Aufnahme eingeschobenem Wassertank der Tankinhalt von außen erkennbar und insbesondere der Wasserfüllstand von der Front sowie auch von der Seite des Getränkeautomaten ablesbar ist. Die Füllstandskala kann dabei sogar über Eck des Griffs geführt sein. Dabei ist es selbstverständlich möglich, dass der gesamte Wassertank aus einem transparenten Material, insbesondere aus transparentem Kunststoff ausgebildet ist, wodurch der Wasserstand von der Front aus gesehen nicht nur am Griff, sondern über die gesamte Frontseite abgelesen werden. Alternativ ist auch denkbar, dass an dem Wassertank ein frontseitiges Blendelement angeordnet ist, welches die dem Benutzer zugewandte Frontseite des Wassertanks bis auf den Griff abdeckt, sodass in diesem Fall der Wasserfüllstand lediglich im Bereich des Griffs abgelesen werden kann. Das Blendelement ist dabei vorzugsweise in derselben Farbe gehalten, wie das Gehäuse des Getränkeautomaten, wodurch ein besonders ansprechendes und einheitliches äußeres Erscheinungsbild geschaffen werden kann.

Bei einer weiteren vorteilhaften Ausführungsform der erfindungsgemäßen Lösung ist der Wassertank als einstückiges Kunststoffspritzgussteil oder als Zwei-KomponentenSpritzgussteil ausgebildet. Besonders die zuerst genannte Variante bietet dabei den großen Vorteil, dass der Wassertank kostengünstig und zugleich qualitativ hochwertig herstellbar ist. Bei der zweiten alternative Ausführungsform, bei welcher der Wassertank als Zwei-Komponentenspritzgussteil ausgebildet ist, ist es möglich, den Griff bzw. den speziell geformten Abschnitt aus transparentem Kunststoff auszubilden, wogegen der übrige Wassertank- aus nicht-transparentem Kunststoff ausgebildet ist, beispielsweise in derselben Farbe wie das Gehäuse des Getränkeautomaten. Bei einer derartigen Ausführungsform könnte beispielsweise auf das im vorherigen Absatz genannte Blendelement verzichtet werden.

Zweckmäßig weist der Wassertank einen weiteren Griff auf, der durch einen speziell geformten Abschnitt einer zweiten seitlichen Gehäusewand eines Wassertanks gebildet ist, wobei sich die erste und die zweite Gehäusewand gegenüber liegen. Durch das Vorsehen zweier solcher speziell geformter Abschnitte, die sich gegenüberliegen, kann ein besonders komfortables Greifen und Entnehmen des Wassertanks mit nur einer einzigen Hand erreicht werden, wobei in diesem Fall darauf zu achten ist, dass der Wassertank nur so breit ist, dass dieser von einer gewöhnlichen Handgröße problemlos gegriffen werden kann.

Die vorliegende Erfindung beruht weiter auf dem allgemeinen Gedanken, einen Wassertank für den zuvor beschriebenen Getränkeautomaten anzugeben, der einen durch einen speziell geformten Abschnitt einer ersten seitlichen Gehäusewand gebildeten Griff aufweist. Ein derartiger Wassertank kann somit auch separat zum Getränkeautomaten, insbesondere zum Kaffeeautomaten, vertrieben werden, insbesondere als Ersatzteil.

Bei einer vorteilhaften Weiterbildung der erfindungsgemäßen Lösung ist der Abschnitt als vertikal verlaufende Stufe ausgebildet, die über einen Rücksprung in die erste seitliche Gehäusewand des Wassertanks übergeht und dadurch ein vergleichsweise einfaches und zudem sicheres Greifen des Wassertanks ermöglicht. In diesem Fall kann auch vorgesehen sein, dass zumindest der Griff transparent ausgebildet ist und eine Füllstandskala aufweist, auf welcher der Wasserstand innerhalb des Tanks problemlos, insbesondere auch von einer Frontseite des Wassertanks aus, abgelesen werden kann. Dies bietet den großen Vorteil, dass kein separates Sichtfenster vorgesehen werden muss, welches beispielsweise mittels Ultraschallschweißen dicht mit dem Wassertank verbunden werden muss, wodurch der Wassertank insgesamt kostengünstig hergestellt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Seitenansicht auf einen erfindungsgemäßen Getränkeautomaten,
- Fig. 2: eine Frontalansicht auf den erfindungsgemäßen Getränkeautomaten,
- Fig. 3: eine Darstellung wie in Fig. 1, jedoch aus einer anderen Perspektive.

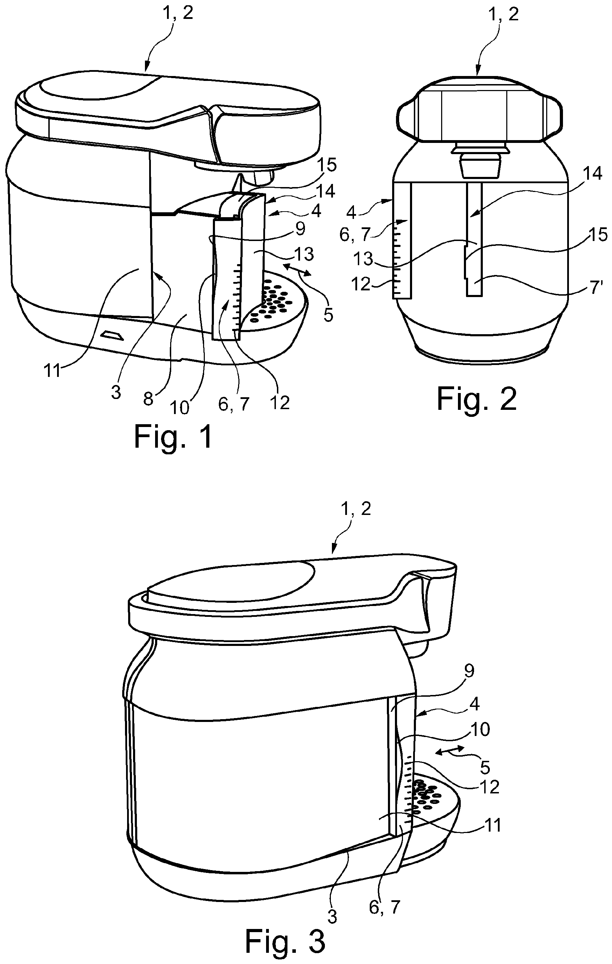

Entsprechend den Figuren 1 bis 3, weist ein erfindungsgemäßer Getränkeautomat 1, welcher beispielsweise als Kaffeeautomat 2 ausgebildet sein kann, eine Aufnahme 3 auf, in welche ein Wassertank 4 frontal einsetzbar ist. Frontal bedeutet in diesem Fall entlang der Richtung 5. Der Wassertank 4 ist somit von vorne aus der Aufnahme 3 entnehmbar und ebenfalls von vorne wieder in die Aufnahme 3 einsetzbar. Zum erleichterten Entnehmen bzw. Einsetzen und Halten des Wassertanks 4, weist dieser einen Griff 6 auf, der durch einen speziell geformten Abschnitt 7 einer ersten seitlichen Gehäusewand 8 des Wassertanks 4 gebildet ist. Der Griff 6 ist somit einstückig mit dem Wassertank 4 ausgebildet, wodurch insbesondere ein separates Herstellen des Griffs sowie ein anschließendes Montieren desselben am Wassertank 4 entfallen können und damit der Wassertank 4 insgesamt kostengünstiger und kompakter ausgebildet werden kann.

Die Möglichkeit, den Wassertank 4 sowohl frontal aus dem Getränkeautomaten 1 zu entnehmen als auch frontal wieder in dessen Aufnahme 3 einzusetzen, bietet den großen Vorteil, dass weder seitlich noch oberhalb des Kaffeeautomaten 2 bzw. des Getränkeautomaten 1 ein Freiraum vorgehalten werden muss, wie dies beispielsweise bei aus dem Stand der Technik bekannten Getränkeautomaten der Fall ist, bei welchen der Wassertank vertikal entnommen wird.

Der Abschnitt 7 ist dabei als vertikal verlaufende Stufe ausgebildet, die über einen Rücksprung 9 in die erste seitliche Gehäusewand 8 des Wassertanks 4 übergeht. Dieser Rücksprung 9 ermöglicht ein vergleichsweise einfaches und zudem sicheres Greifen des Griffs 6 und darüber auch des Wassertanks 4. Um die Haptik zum Greifen des Wassertanks 4 weiter verbessern zu können, kann an der Stufe eine Leiste 10 angeordnet sein, welche beispielsweise orthogonal zum Abschnitt 7 absteht.

Betrachtet man die Figur 1, so kann man erkennen, dass der Wassertank 4 lediglich teilweise in die Aufnahme 3 eingeschoben ist, wogegen bei der Darstellung gemäß der Figur 3 der Wassertank 4 vollständig in die Aufnahme 3 eingeschoben ist, und zwar so weit, bis eine Wand 11 der Aufnahme 3 an dem Rücksprung 9 anliegt. Wie den Figuren 1 und 3 weiter zu entnehmen ist, ist dabei die Wand 11 nach innen versetzt und ermöglicht somit einen durch den Rücksprung 9 gebildeten Hinterschnitt zum Greifen des Wassertanks 4.

Um möglichst einfach einen Wasserfüllstand innerhalb des Wassertanks 4 ablesen zu können, ist zumindest der Griff 6 des Wassertanks 4 transparent ausgebildet und weist eine Füllstandskala 12 auf. Hierdurch ist es auch aus einer Frontalansicht (vgl. Fig. 2) möglich, auf einfache Weise den Wasserfüllstand innerhalb des Wassertanks 4 ablesen zu können.

Generell kann der Wassertank 4 als Kunststoffspritzgussteil ausgebildet sein und zwar entweder vollständig aus transparentem Kunststoff und damit in einstückiger Ausführungsform oder aber als Zwei-Komponentenspritzgussteil, bei welchem zumindest der Abschnitt 7, auf welchem die Füllstandskala 12 angeordnet ist, transparent ausgebildet ist. Bei der zuerst genannten Alternative ist es möglich, ein frontseitiges Blendelement 13 am Wassertank 4 anzuordnen, beispielsweise zu verclipsen oder zu verkleben oder zu verschweißen, welches die Frontseite des Wassertanks 4 bis auf den Abschnitt 7 des Griffs 6 abdeckt.

Bei einer weiteren möglichen Ausführungsform der erfindungsgemäßen Lösung weist der Wassertank 4 einen weiteren Griff 14 (vgl. die Fig. 1 und 2) auf, der durch einen speziell geformten Abschnitt 7' einer zweiten seitlichen Gehäusewand 15 des Wassertanks 4 gebildet ist, wobei sich die erste und zweite Gehäusewand 8, 15 gegenüber liegen. Dies stellt jedoch lediglich eine mögliche Option dar und erleichtert insbesondere das einhändige Herausziehen und Halten des Wassertanks 4.

Der Wassertank 4 ist selbstverständlich ebenfalls Gegenstand der Erfindung und kann beispielsweise separat als Ersatzteil angeboten werden. Der Wassertank 4 weist in diesem Fall einen durch den speziell geformten Abschnitt 7 der ersten seitlichen Gehäusewand 8 des Wassertanks 4 gebildeten 6 auf und ist komplementär zur Aufnahme 3 des Getränkeautomaten 1 ausgebildet. Der Abschnitt 7 ist dabei als vertikal verlaufende Stufe ausgebildet, die über den Rücksprung 9 in die erste seitliche Gehäusewand 8 des Wassertanks 4 übergeht. Zumindest der Griff 6 kann dabei transparent ausgebildet sein und eine Füllstandskala 12 aufweisen.

Mit dem erfindungsgemäßen Getränkeautomaten 1 ist ein frontales Be- und Entladen des Getränkeautomaten 1 mit einem Wassertank 4 möglich, wodurch insbesondere der bislang oberhalb eines solchen Getränkeautomaten 1 erforderliche Freiraum nicht mehr vorgehalten werden muss, sodass der erfindungsgemäße Getränkeautomat 1, insbesondere der erfindungsgemäße Kaffeeautomat 2, in deutlich kompakteren Bauräumen verbaut werden kann. Durch die Integration des Griffes 6 in die erste seitliche Gehäusewand 8 des Wassertanks 4 kann auch auf eine separate Herstellung eines solchen Griffs sowie eine anschließende aufwändige und teure Montage desselben am Wassertank verzichtet werden, wodurch der Wassertank 4 insgesamt kostengünstiger hergestellt werden kann. Mit dem erfindungsgemäßen Getränkeautomaten 1 ist somit nicht nur eine Komfortsteigerung erreichbar, sondern zudem auch eine Reduzierung der Herstellungskosten.

### Bezugszeichenliste

- 1: Getränkeautomat
- 2: Kaffeeautomat
- 3: Aufnahme
- 4: Wassertank
- 5: Richtung
- 6: Griff
- 7: Abschnitt
- 8: erste seitliche Gehäusewand
- 9: Rücksprung
- 10: Leiste
- 11: Wand der Aufnahme 3
- 12: Füllstandskala
- 13: Blendelement
- 14: weiterer Griff
- 15: zweite seitliche Gehäusewand

## Patentansprüche

1. Getränkeautomat (1), insbesondere ein Kaffeeautomat (2), mit einem Wassertank (4) und mit einer Aufnahme (3) für den Wassertank (4), wobei der Wassertank (4) frontal aus der Aufnahme (3) entnehmbar und frontal in diese einsetzbar ist und wobei der Wassertank (4) einen Griff (6) aufweist, über welchen er aus der Aufnahme (3) entnehmbar und in diese einsetzbar ist und gehalten werden kann, wobei der Griff (6) durch einen speziell geformten Abschnitt (7) einer ersten seitlichen Gehäusewand (8) des Wassertanks (4) gebildet ist, **dadurch gekennzeichnet, dass** zumindest der Griff (6) transparent ausgebildet ist und eine Füllstandskala (12) aufweist.

2. Getränkeautomat nach Anspruch 1, **dadurch gekennzeichnet, dass** der Abschnitt (7) als vertikal verlaufende Stufe ausgebildet ist, die über einen Rücksprung (9) in die erste seitliche Gehäusewand (8) des Wassertanks (4) übergeht.

3. Getränkeautomat nach Anspruch 2, **dadurch gekennzeichnet, dass** der Wassertank (4) soweit in die Aufnahme (3) einschiebbar ist, bis eine Wand (11) der Aufnahme (3) an dem Rücksprung (9) anliegt.

4. Getränkeautomat nach Anspruch 3, **dadurch gekennzeichnet, dass** die Wand (11) der Aufnahme (3) derart nach innen versetzt ist, dass die durch den Rücksprung (9) gebildete Stufe bei einer vollständig in die Aufnahme (3) eingeschobenem Wassertank (4) erhalten bleibt.

5. Getränkeautomat nach Anspruch 2, 3 oder 4, **dadurch gekennzeichnet, dass** an der Stufe eine Leiste (10) angeordnet.

6. Getränkeautomat nach einem der Ansprüche 1 bis 5, **dadurch gekennzeichnet, dass** der Wassertank (4) ein frontseitiges Blendelement (13) aufweist.

7. Getränkeautomat nach einem der Ansprüche 1 bis 6, **dadurch gekennzeichnet, dass** der Wassertank (4) als einstückiges Kunststoffspritzgussteil oder als Zwei-Komponentenspritzgussteil ausgebildet ist.

8. Getränkeautomat nach einem der Ansprüche 1 bis 7, **dadurch gekennzeichnet, dass** der Wassertank (4) einen weiteren (14) Griff aufweist, der durch einen speziell geformten Abschnitt (7') einer zweiten seitlichen Gehäusewand (15) des Wassertanks (4) gebildet ist, wobei sich die erste und die zweite Gehäusewand (8,15) gegenüberliegen.

9. Wassertank (4) eines Getränkeautomaten (1), insbesondere eines Kaffeeautomaten (2), der einen durch einen speziell geformten Abschnitt (7) einer ersten seitlichen Gehäusewand (8) des Wassertanks (4) gebildeten Griff (6) aufweist, **dadurch gekennzeichnet, dass** zumindest der Griff (6) transparent ausgebildet ist und eine Füllstandskala (12) aufweist.

10. Wassertank nach Anspruch 9, **dadurch gekennzeichnet, dass** der Abschnitt (7) als vertikal verlaufende Stufe ausgebildet ist, die über einen Rücksprung (9) in die erste seitliche Gehäusewand (8) des Wassertanks (4) übergeht,.

## Claims

1. Drinks machine (1), in particular a coffee machine (2), having a water tank (4) and having a receptacle (3) for the water tank (4), wherein the water tank (4) can be removed at the front from the receptacle (3) and inserted at the front into it and wherein the water tank (4) has a handle (6), via which it can be removed from and inserted into the receptacle (3) and can be held, wherein the handle (6) is formed by a specially shaped section (7) of a first lateral housing wall (8) of the water tank (4), **characterised in that** at least the handle (6) is designed to be transparent and has a filling level scale (12).

2. Drinks machine according to claim 1, **characterised in that** the section (7) is designed as a vertically extending step, which merges via a recess (9) into the first lateral housing wall (8) of the water tank (4).

3. Drinks machine according to claim 2, **characterised in that** the water tank (4) can be introduced far enough into the receptacle (3) until a wall (11) of the receptacle (3) abuts against the recess (9).

4. Drinks machine according to claim 3, **characterised in that** the wall (11) of the receptacle (3) is offset inwards such that the step formed by the recess (9) is retained when a water tank (4) is fully introduced into the receptacle (3).

5. Drinks machine according to claim 2, 3 or 4, **characterised in that** a bar (10) is arranged on the step.

6. Drinks machine according to one of claims 1 to 5, **characterised in that** the water tank (4) has a front-side screen element (13).

7. Drinks machine according to one of claims 1 to 6, **characterised in that** the water tank (4) is designed as a one-piece plastic injection moulded part or as a two-component injection moulded part.

8. Drinks machine according to one of claims 1 to 7, **characterised in that** the water tank (4) has a further (14) handle which is formed by a specially shaped section (7') of a second lateral housing wall (15) of the water tank (4), wherein the first and the second housing wall (8, 15) oppose one another.

9. Water tank (4) of a drinks machine (1), in particular of a coffee machine (2), which has a handle (6) formed by a specially shaped section (7) of a first lateral housing wall (8) of the water tank (4), **characterised in that** at least the handle (6) is designed to be transparent and has a filling level scale (12).

10. Water tank according to claim 9, **characterised in that** the section (7) is formed as a vertically extending step which merges via a recess (9) into the first lateral housing wall (8) of the water tank (4).

## Revendications

1. Distributeur automatique de boisson (1), en particulier machine à café (2), avec un réservoir d'eau (4) et un logement (3) pour le réservoir d'eau (4), dans lequel le réservoir d'eau (4) peut être retiré par l'avant du logement (3) et inséré par l'avant dans celui-ci et dans lequel le réservoir d'eau (4) présente une poignée (6) par le biais de laquelle il peut être retiré du logement (3) et être inséré et maintenu dans celui-ci, dans lequel la poignée (6) est formée par le biais d'une section ayant une forme spéciale (7) d'une première paroi de bâti latérale (8) du réservoir d'eau (4), **caractérisé en ce que** au moins la poignée (6) est réalisée transparente et présente une échelle de niveau de remplissage (12).

2. Distributeur automatique de boisson selon la revendication 1, **caractérisé en ce que** la section (7) est réalisée en tant qu'échelon s'étendant dans le sens vertical qui passe dans la première paroi de bâti latérale (8) du réservoir d'eau (4) par le biais d'un retrait (9).

3. Distributeur automatique de boisson selon la revendication 2, **caractérisé en ce que** le réservoir d'eau (4) peut être introduit dans le logement (3) jusqu'à ce qu'une paroi (11) du logement (3) s'appuie sur le retrait (9).

4. Distributeur automatique de boisson selon la revendication 3, **caractérisé en ce que** la paroi (11) du logement (3) est décalée vers l'intérieur de telle sorte que l'échelon formé par le biais du retrait (9) est conservé lorsque le réservoir d'eau (4) est inséré entièrement dans le logement (3).

5. Distributeur automatique de boisson selon la revendication 2, 3 ou 4, **caractérisé en ce qu'**une baguette (10) est disposée au niveau de l'échelon.

6. Distributeur automatique de boisson selon l'une des revendications 1 à 5, **caractérisé en ce que** le réservoir d'eau (4) présente un élément de recouvrement côté avant (13).

7. Distributeur automatique de boisson selon l'une des revendications 1 à 6, **caractérisé en ce que** le réservoir d'eau (4) est réalisé en tant que pièce moulée par injection d'un seul tenant ou en tant que pièce moulée par injection à deux composants.

8. Distributeur automatique de boisson selon l'une des revendications 1 à 7, **caractérisé en ce que** le réservoir d'eau (4) présente une autre poignée (14) qui est formée par le biais d'une section ayant une forme spéciale (7') d'une seconde paroi de bâti latérale (15) du réservoir d'eau (4), dans lequel la première et la seconde paroi de bâti (8, 15) se font face.

9. Réservoir d'eau (4) d'un distributeur automatique de boisson (1), en particulier d'une machine à café (2), qui présente une poignée (6) formée par le biais d'une section ayant une forme spéciale (7) d'une première paroi de bâti latérale (8) du réservoir d'eau (4), **caractérisé en ce que** au moins la poignée (6) est réalisée transparente et présente une échelle de niveau de remplissage (12).

10. Réservoir d'eau selon la revendication 9, **caractérisé en ce que** la section (7) est réalisée en tant qu'échelon s'étendant dans le sens vertical qui passe dans la première paroi de bâti latérale (8) du réservoir d'eau (4) par le biais d'un retrait (9).
